# EUROPÄISCHE PATENTSCHRIFT

(11) **EP 1 073 077 B1**
(45) Veröffentlichungstag und Bekanntmachung des Hinweises auf die Patenterteilung: **15.10.2003**
(21) Anmeldenummer: 00113449.3
(22) Anmeldetag: 24.06.2000
(51) Int. Cl.: H01H 3/24, H01H 3/14, E05F 15/00, F16P 3/12

(54) **Verfahren zum Betreiben eines Signalsensors sowie eines Schaltelementes**
Method of operating a signal sensor like a switch element
Méthode pour actionner un capteur de signaux tel qu'un élément de commutation

(30) Priorität: 24.07.1999 DE 19934829
(43) Veröffentlichungstag der Anmeldung: 31.01.2001
(73) Patentinhaber: Bircher AG, CH-8222 Beringen (CH)
(72) Erfinder: deJager, Godert, 8604 Volketswil (CH); Lexer, Christof, 79798 Jestetten (DE)
(74) Vertreter: Weiss, Peter, Dr.

(56) Entgegenhaltungen:
- EP-A- 0 092 744
- US-A- 4 773 183

## Beschreibung

Die Erfindung betrifft ein Verfahren zum Betreiben eines Signalgebers sowie eines Schaltelementes, oder Druckwellenschalters, wobei zur Absicherung von Einklemmstellen, Schaltleisten oder Schaltflächen durch mechanische Betätigung in dem Signalgeber eine Druckwelle erzeugt wird, welche in dem Schaltelement ein Signal erzeugt und zur Überwachung und Überprüfung auf Betriebssicherheit der Signalgeber mit wenigstens einem Testsignal beaufschlagt wird.

Bei herkömmlichen Verfahren zum Betreiben eines Signalgebers sowie eines Schaltelementes wird an einen bevorzugt als Hohlprofil ausgebildeten Signalgeber eine Zuführleitung angeschlossen, die zu einem Drucksenor führt.

Wird beispielsweise dieser Signalgeber, insbesondere das Hohlprofilelement von aussen mechanisch betätigt, so entsteht eine Druckwelle. Diese lässt sich als Schaltsignal in dem Drucksensor messen. Daraufhin kann ein Betriebszustand, beispielsweise einer Maschine entsprechend gesteuert werden. Dieses Signal wird für unterschiedlichste Zwecke gerade auch in der Sicherheitstechnik zu Sicherung von Türen, Toren od. dgl. verwendet.

Dabei sind die Signalgeber, insbesondere Gummihohlprofile, über einen Schlauch mit sogenannten Druckwellenschaltern verbunden. Herkömmliche Druckwellenschalter bestehen aus einer Druckkammer, welche mit einer Membran abgedichtet sind. Wird auf den Signalgeber ein mechanischer Druck ausgeübt, so wird Luft im Hohlprofil komprimiert und ein Druck aufgebaut, der die Membran im Drucksensor zum Auslenken bringt. In Verbindung mit der Membran steht ein elektrischer Kontakt, der bei einem Luftüberdruck, z.B. von zwei Millibar schliesst. Mit der Kontaktschliessung wird ein Stop- oder Umkehrsignal am Antrieb der Tür oder an das Tor übermittelt. Nachteilig ist, dass bei einen Defekt z.B. einem Riss im Hohlprofil das System nicht mehr arbeitet. Dieser Defekt bewirkt, wenn das System im "sicheren Zustand" eingestellt ist, ein permanentes Weiterarbeiten, ohne dass der Fehler erkannt wird. Dies hat verherende Folgen für die Betriebssicherheit.

Ferner ist nachteilig, dass beispielsweise bei Temperaturschwankungen im Betrieb, bedingt durch unterschiedliche Tagestemperaturen od. dgl. die Messergebnisse stark beeinträchtigt werden können, so dass unter Umständen auch Fehler auftreten können.

Die US 4,773,183 welche als nächstliegender Stand der Technik angesehen wird beschreibt eine Einrichtung zum Erkennen von Signalen, an welche ein Signalgeber anschliessbar ist, welcher mit einem Drucksensor in Verbindung steht und welchem ein Pulsgeberelement zugeordnet ist. Im wesentlichen wird über das Sensorelement ein Schliessen einer Fensterscheibe oder eines Schiebedaches eines Fahrzeuges durch die Volumenänderung signalisiert.

Die EP 0 092 744 beschriebt eine elektropneumatische Einrichtung zur Absicherung eines Gefahrenbereiches bei einer in Betrieb stehenden Maschine oder Anlage, bei welcher ein Gefahrenbereich durch ein an ein pneumatisches Leitungsnetz angeschlossener Fussboden abgesichert ist, bei dessen Betretung oder Belegung sich mindestens eine Druckwelle zu einem Druckwellenschalter fortpflanzt, der mittels des elektrischen Impulses ein Ausschalten der Maschine oder einer Anlage veranlasst.

Der vorliegenden Erfindung liegt die Aufgabe zugrunde, ein Verfahren sowie eine Einrichtung der eingangs genannten Art zu schaffen, mit welchen auf einfache und kostengünstige Weise die Sicherheit des Systems im Betrieb permanent gewährleistet und überprüfbar ist. Ferner soll Einfluss auf Temperaturänderungen im Betrieb genommen werden können.

Zur Lösung dieser Aufgabe führt, dass zur Bestimmung einer Schaltschwelle für ein Schaltsignal, die Höhe des Testsignals oder die Höhe der Testschwelle nach jedem angelegten und neu bestimmten Testsignal in dessen Abhängigkeit erneut bestimmt und festgelegt wird.

Bei der vorliegenden Erfindung wird ein autonomes Selbsttestsystem betrieben, wobei von einer Einrichtung, insbesondere eines Druckwellenschalters aus mit einem Pulsgeberelement permanent ein Testsignal auf den Signalgeber angelegt wird. Bevor das Testsignal an den Signalgeber angelegt wird, wird im Drucksensor eine Nullpunktmessung bzw. Betriebsdruckmessung in Ruhelage durchgeführt, wobei ein Ausgangs- bzw. Referenzpunkt festgelegt wird.

Dann erfolgt eine Testsignalerzeugung, wobei das Testsignal im Drucksensor, nachdem es den Signalgeber als Druckwelle durchlaufen hat, exakt messbar ist.

Von diesem maximalen Wert des Testsignales, wird eine Testschwelle vorher festgelegt, die bei Erreichen bzw. Überschreiten ein Signal für eine Betriebssicherheit des Signalgebers anzeigt bzw. schaltet.

Ausgehend von dieser Testschwelle wird in einer Steuerung eine Schaltschwelle für ein Schaltsignal festgelegt und berechnet.

Durch ein beispielsweise mechanisches Betätigen von aussen auf den Signalgeber, wird ein entsprechendes Schaltsignal erzeugt, welches bei Erreichen der Schaltsignalschwelle ein entsprechendes aktives Signal der Auswerteeinrichtung übermittelt.

Findet im System eine Druckerhöhung, beispielsweise durch Temperaturänderung statt, so wird automatisch druckbedingt der Nullpunkt bzw. Referenzwert vor dem Einsetzen des Testsignales neu festgelegt, wobei dann auch ein entsprechendes Testsignal neu gemessen und die entsprechende vorher festgelegte Testschwelle auf die Druckänderung im System angepasst wird. Durch die Anpassung der Testschwelle wird auch die Schaltschwelle neu berechnet, damit das entsprechende Schaltsignal proportional zum Testsignal temperaturbedingte Druckänderungen ausgleicht.

Dabei kann dieses Verfahren sowie die Einrichtung als autonomes System als Einheit an herkömmliche Signalgeber angeschlossen werden, um beispielsweise als Schliesskantensicherung an kraftbetätigten Türen und Toren die geforderten Zertifikate auf dem Gebiet der Sicherheitstechnik zu erhalten.

Dabei wird zur Erzeugung des Testsignales im Pulsgeberelement ein Druckpulsgenerator verwendet, der eine minimale Betätigung des Hohlprofiles simuliert. Zur Detektion der Test- und Betätigungsignale werden ein Druckschalter oder ein Drucksensor verwendet. Die Steuerung und Signalauswertung erfolgt von einer Steuerung, insbesondere von einem Mikroprozessor, wobei das Pulsgeberelement sowie der Drucksensor und die Steuerung eine einzelne Baueinheit bilden, die universell, beispielsweise in der Nähe eines Gummiprofiles bzw. Signalgebers leicht montiert werden kann.

Die Mikroprozessorsteuerung ist so ausgelegt, dass der Ausgang, insbesondere zur Auswerteeinrichtung nur auf "sicher" geschaltet ist, wenn der Test erfolgreich war und das Profil nicht betätigt wurde.

Die Testanforderung kann entweder in vorbestimmten Zeitabständen von der Steuerung, insbesondere vom Mikroprozessor oder z.B. von einem Endschalter oder Bewegungssensor erzeugt werden, wenn beispielsweise das Tor den geöffneten Zustand erreicht oder verlässt.

Der Signalgeber ist insbesondere als Gummihohlprofil so ausgelegt, dass das erzeugte Testsignal als Druckwelle auf der entgegengesetzten Seite vom Anschluss des Drucksensors in den Signalgeber eingeleitet wird.

Ist der Signalgeber bzw. das Gummiprofil oder eine der Zuführleitungen defekt, kann der erzeugte Druckpuls bzw. die Druckwelle nicht in der erforderlichen Form vom Drucksensor empfangen werden. In diesem Fall schaltet die Steuerung, insbesondere der Mikroprozessor den Ausgang derart, dass das Tor nicht mehr weiterbewegt werden kann.

Wird, ohne dass ein Testpuls erzeugt wurde, ein Druckpuls empfangen oder ein grösserer Druckpuls empfangen, als der Testpuls erzeugt werden könnte, dann wird dies von der Steuerung als Betätigung des Profiles interpretiert. Auch in diesem Fall schaltet die Steuerung den Ausgang derart, dass das Tor bzw. die Maschine od. dgl. nicht mehr weiterbewegt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf eine Einrichtung zum Erkennen von Signalen;
Figuren 2a und 2b schematisch dargestellte Draufsichten auf entsprechende Anschlussmöglichkeiten eines Signalgebers zum Anschliessen eines Pulsgeberelementes und eines Drucksensors;
Figuren 3a bis 3c entsprechende Signalverläufe, gemessen am Drucksensor, welche innerhalb eines Signalgebers, bei angelegtem Testsignal und Schaltsignal, beim jeweiligen Überschreiten einer Testschwelle und/oder einer Schaltschwelle erzeugt werden.

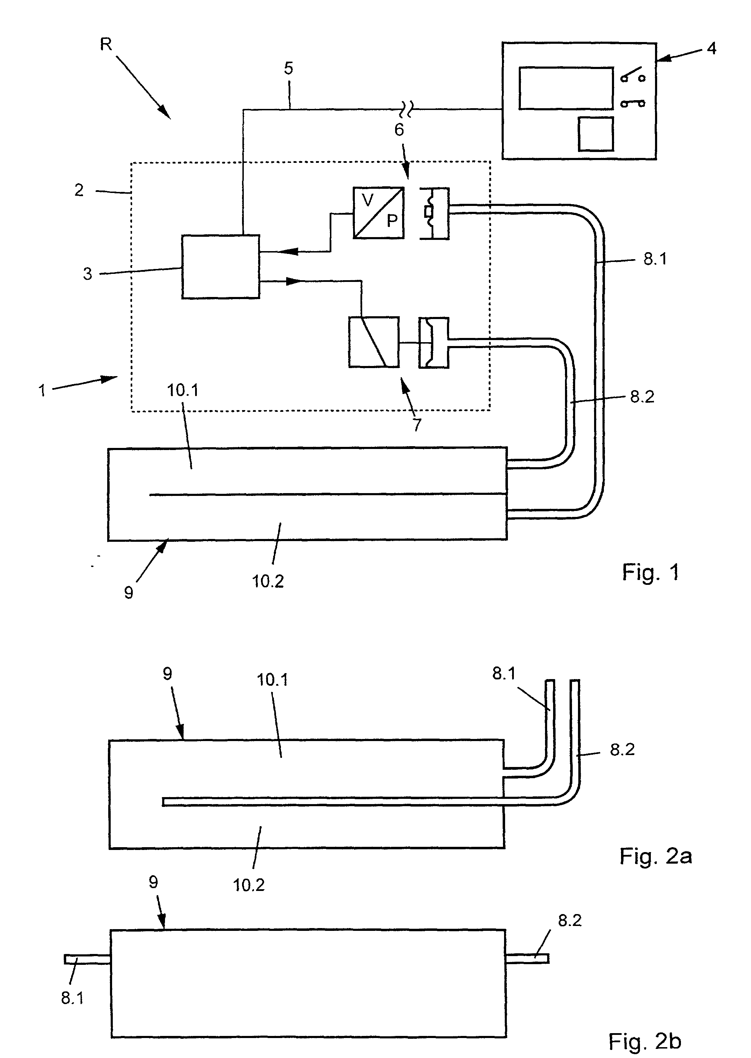

Gemäss Figur 1 weist eine erfindungsgemässe Einrichtung R zum Erkennen von Signalen, insbesondere Druckwellenschalter 1 ein Gehäuse 2 auf, in welchem eine Steuerung 3, insbesondere Mikroprozessor mit einer Auswerteeinrichtung 4 über eine Verbindungsleitung 5 verbunden ist. An die Steuerung 3 schliessen einerseits ein Drucksensor 6 und ein Pulsgeberelement 7 an, welche jeweils über Zuführleitungen 8.1, 8.2 mit einem Signalgeber 9 in Verbindung stehen.

Bevorzugt ist der Signalgeber 9 in Kammern 10.1, 10.2 unterteilt, wobei in die eine Kammer 10.1 die Zuführleitung 8.2 des Pulsgebers 7 und in die andere Kammer 10.2 die Zuführleitung 8.1 des Drucksensors 6 einmündet.

Die Funktionsweise der vorliegenden Erfindung ist folgende:

Wird ein Testsignal im Pulsgeber 7 erzeugt, so wird es als eine Testwelle bzw. als ein Druckpuls durch die Kammer 10.1 und durch die Kammer 10.2 vollständig geleitet und gelangt in den Drucksensor 6. Dort wird das Testsignal entsprechend gemessen und in der Steuerung 3 ausgewertet.

Vor dem Aufgeben des Testsignales wird im Drucksensor 6 ein Nullpunkt bzw. ein Betriebsdruck in Ruhelage gemessen und als Referenzsignal gespeichert. Dann kann eine Differenz, als Testdruck bzw. als korrigierte Testschwelle gemessen oder ermittelt werden. Anschliessend wird auf Grundlage dieser Wert die Schaltschwelle für das entsprechende Schaltsignal in Abhängigkeit von Testsignal und/oder von der korrigierten Testschwelle bestimmt und errechnet.

Bei der vorliegenden Erfindung wird permanent ein Testsignal ausgehend vom Pulsgeberelement an den Signalgeber 9 angelegt. Das Testsignal kann in gewünschten und gewählten Intervallen permanent wiederholt werden. Separat wird kurz vor Aussendung des Testsignales der aktuelle Druck im Drucksensor 6 gemessen, damit eine Druckdifferenz und insbesondere ein Betrag des Testsignales genau festlegbar ist. Auch lässt sich auf diese Weise eine Testschwelle im Versuch, bevorzugt 80% des Maximalbetrages des Testsignales, vorher festlegen.

Sind Testschwelle und Testsignal festgelegt, lässt sich aufgrund des Betrages des Testsignales bzw. der Testschwelle eine Schaltschwelle festlegen.

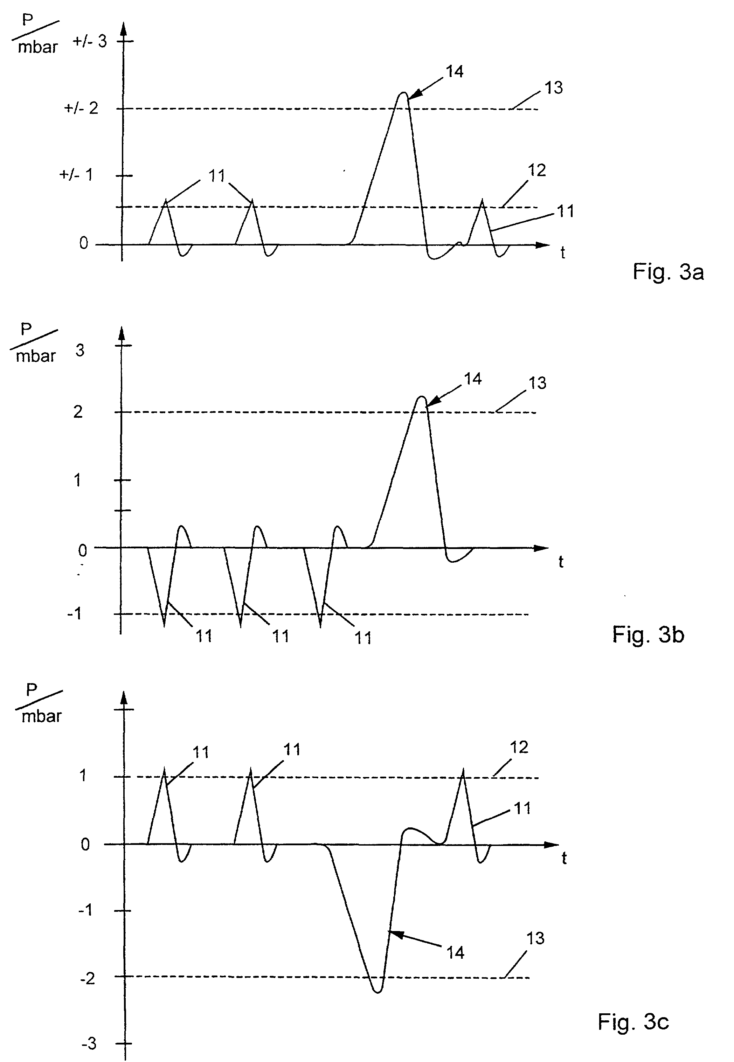

Wie insbesondere aus Figur 3a ersichtlich, ist ein Testsignal 11, beispielsweise angelegt bei 0,5 Millibar Druck, wobei eine Testschwelle 12, wie sie gestrichelt angedeutet ist, auf in etwa 80% als des maximalen Ausschlags des Testsignales 11 festgelegt wird. Wird ein Testsignal 11 des Pulsgeberelementes 7 ausgesendet und wird im Drucksensor 6 die Testschwelle 12 nicht erreicht, so ist dies ein Hinweis auf einen Defekt des Signalgebers 9. Entsprechende Massnahmen können in der Auswerteeinrichtung 4 ergriffen werden, um einen Betrieb, beispielsweise einer Maschine od. dgl. einzustellen.

Aufgrund der Messung des Betriebsdruckes jeweils vor Aussenden eines Testsignales 11 lässt sich der Betrag des Testsignales 11 bzw. der Testschwelle 12 permanent im Betrieb genau bestimmen und korrigieren. Jeweils nach dem letzten Testsignal 11 wird eine Schaltschwelle 13 für ein Schaltsignal 14 jeweils erneut berechnet.

Bevorzugt ist das erforderliche Schaltsignal 14 doppelt so hoch bzw. die Schaltschwelle 13 doppelt so gross wie die Testschwelle 12 des Testsignales 11.

Erfolgt beispielsweise eine Temperaturerhöhung im Signalgeber 9, was eine Druckerhöhung zur Folge hat, so wächst entsprechend das Testsignal 11 wie auch die Testschwelle 12 an, bzw. wird korrigiert.

Entsprechend grösser fallen dann die Ausschläge des Schaltsignales 14 aus, wodurch auch die Schaltschwelle 13 zum Schalten eines bestimmten Signales durch Betätigen des Signalgebers 9 neu festgelegt bzw. jeweils neu berechnet wird.

In Figur 3a können die Testsignale 11 sowie die Schaltsignale 14 als Druck- oder als Unterdrucksignal ausgebildet sein.

In Figur 3b ist aufgezeigt, dass die Testsignale 11 als Unterdrucksignale vom Pulsgeberelement 7 ausgehen und die entsprechenden Schaltsignale 14 als Drucksignale durch mechanisches Betätigen im Signalgeber 9 erzeugt werden.

Auch der umgekehrte Fall, wie es insbesondere in Figur 3c dargestellt ist, ist möglich, dass die Schaltsignale 14 als Unterdrucksignale im Signalgeber 9 erzeugt werden, wobei die Testsignale 11 als Druck- bzw. Überdrucksignale vom Impulsgeberelement 7 erzeugt werden.

In den Figuren 2a und 2b ist aufgezeigt, wie die einzelnen Zuführleitungen 8.1, 8.2 in unterschiedlicher Weise einends oder beiderends in den Signalgeber 9 einmünden. Dabei kann auch daran gedacht sein, die Zuführleitung 8.2 schlauchartig in den Signalgeber 9, wie es insbesondere in Figur 2a dargestellt ist, einzuleiten, damit der vollständige Signalgeber 9 mittels des Testsignales 11 beaufschlagt wird, welches über die Zuführleitung 8.1 zum Drucksensor 6 gelangt und anschliessend ausgewertet wird.

| **Positionszahlenliste** | | | | | |
|---|---|---|---|---|---|
| 1 | Druckwellenschalter | 34 | | 6 7 | |
| 2 | Gehäuse | 35 | | 68 | |
| 3 | Steuerung | 36 | | 69 | |
| 4 | Auswerteeinrichtung | 37 | | 70 | |
| 5 | Verbindungsleitung | 38 | | 71 | |
| 6 | Drucksensor | 39 | | 72 | |
| 7 | Pulsgeberelement | 40 | | 73 | |
| 8 | Zuführleitungen | 41 | | 74 | |
| 9 | Signalgeber | 42 | | 75 | |
| 10 | Kammer | 43 | | 76 | |
| 11 | Testsignal | 44 | | 77 | |
| 12 | Testschwelle | 45 | | 78 | |
| 13 | Schaltschwelle | 46 | | 79 | |
| 14 | Schaltsignal | 47 | | | |
| 15 | | 48 | | | |
| 16 | | 49 | | R | Einrichtung |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben eines Signalgebers sowie eines Schaltelementes, oder Druckwellenschalters, wobei zur Absicherung von Einklemmstellen, Schaltleisten oder Schaltflächen durch mechanische Betätigung in dem Signalgeber eine Druckwelle erzeugt wird, welche in dem Schaltelement ein Signal erzeugt und zur Überwachung und Überprüfung auf Betriebssicherheit der Signalgeber mit wenigstens einem Testsignal beaufschlagt wird,
**dadurch gekennzeichnet,**
**dass** zur Bestimmung einer Schaltschwelle für ein Schaltsignal, die Höhe des Testsignals oder die Höhe der Testschwelle nach jedem angelegten und neu bestimmten Testsignal in dessen Abhängigkeit erneut bestimmt und festgelegt wird.

2. Verfahren nach Anspruch 1, **dadurch gekennzeichnet, dass** zur Überwachung und Überprüfung auf Betriebssicherheit ein Testsignal auf den Signalgeber gegeben wird, durch welches permanent eine Schaltschwelle für ein Schaltsignal aufgrund der Messung des Betriebsdruckes, ausgelöst durch mechanisches Betätigen, erneut bestimmt wird.

3. Verfahren nach Anspruch 1 oder 2, **dadurch gekennzeichnet, dass** zur Überwachung und Überprüfung auf Betriebssicherheit ein Testsignal auf den Signalgeber gegeben wird, welches bei Überschreiten einer Testschwelle ein Signal im Druckwellenschalter erzeugt und an die Auswerteeinrichtung weitergeleitet wird.

4. Verfahren nach wenigstens einem der Ansprüche 1 bis 3, **dadurch gekennzeichnet, dass** das Testsignal in periodischen und wählbaren Zeitabständen an den Signalgeber angelegt wird.

5. Verfahren nach wenigstens einem der Ansprüche 1 bis 4, **dadurch gekennzeichnet, dass** unter Verwendung von Drucksensoren das in den Signalgeber eingeleitete Testsignal dem Betrag nach gemessen wird.

6. Verfahren nach wenigstens einem der Ansprüche 1 bis 5, **dadurch gekennzeichnet, dass** das Testsignal als Druck- oder Unterdrucksignal zur Bestimmung der Schaltschwelle für das Schaltsignal am Signalgeber angelegt wird, wobei das Testsignal betragsmässig kleiner als das Schaltsignal an den Signalgeber angelegt wird.

7. Verfahren nach wenigstens einem der Ansprüche 1 bis 6, **dadurch gekennzeichnet, dass** durch Messen eines Betriebsdrucks der unbetätigten Signalgebers mittels eines Drucksensors ein Nullpunkt als Ausgangspunkt oder Referenz für das Testsignal oder die Testschwelle festgelegt wird.

8. Verfahren nach Anspruch 7, **dadurch gekennzeichnet, dass** der Nullpunkt vor jedem Testsignal im Drucksensor erneut bestimmt und als Ausgangspunkt für das Bestimmen einer Höhe des Testsignales oder einer Testschwelle neu gemessen wird.

9. Verfahren nach wenigstens einem der Ansprüche 1 bis 8, **dadurch gekennzeichnet, dass** bei Unterschreiten einer Testschwelle des auf den Signalgeber angelegten Testsignales ein Rückschluss auf einen Defekt, insbesondere eine Leckage ermöglicht wird.

10. Einrichtung zum Erkennen von Signalen, oder Druckwellenschalter (1), an welchen zumindest ein Signalgeber (9) anschliessbar ist, welcher mit einem Drucksensor (6) in Verbindung steht, wobei dem Druckwellenschalter (1) zumindest ein Pulsgeberelement (7) zur Erzeugung eines Testsignals zugeordnet ist, **dadurch gekennzeichnet, dass** diese mit Mitteln versehen ist, mittels derer zur Bestimmung einer Schaltschwelle für ein Schaltsignal die Höhe des Testsignals oder die Höhe der Testschwelle nach jedem angelegten und neu bestimmten Testsignal in dessen Abhängigkeit erneut bestimmt und festgelegt wird.

11. Einrichtung nach Anspruch 10, **dadurch gekennzeichnet, dass** das Pulsgeberelement (7) des Druckwellenschalters (1) mit dem Signalgeber (9) verbunden ist.

12. Einrichtung nach Anspruch 10 oder 11, **dadurch gekennzeichnet, dass** Drucksensor (6) und Pulsgeberelement (7) mit einer Steuerung (3) verbunden sind, welche ein aktives Signal an eine Auswerteeinrichtung (4) liefern.

13. Einrichtung nach wenigstens einem der Ansprüche 10 bis 12, **dadurch gekennzeichnet, dass** im Pulsgeberelement (7) zumindest ein Testsignal (11) erzeugbar ist, welches über eine Zuführleitung (8.2) in den Signalgeber (9) einleitbar ist, wobei das Testsignal (11) den Signalgeber (9) mit zumindest einer Kammer (10.1, 10.2) vollständig durchläuft und im anschliessenden Drucksensor (6) messbar ist.

14. Einrichtung nach wenigstens einem der Ansprüche 10 bis 13, **dadurch gekennzeichnet, dass** vom Pulsgeberelement (7) ein wählbares, in zeitlich wählbaren Intervallen ausgehendes Testsignal (11) ausgeht, welches bei Überschreiten einer wählbaren Testschwelle (12), gemessen im Drucksensor (6) in der Steuerung (3) ein entsprechendes Signal erzeugt.

15. Einrichtung nach wenigstens einem der Ansprüche 10 bis 14, **dadurch gekennzeichnet, dass** an einem Signalgeber (9) einends das Pulsgeberelement (7) und andernends der Drucksensor (6) des Druckwellenschalters (1) anschliesst.

## Claims

1. Method of operating a signal transmitter and a switching member or pressure wave switch, a pressure wave being generated to protect clamping-in locations, contact bars or switching faces by mechanical actuation in the signal transmitter, said pressure wave generating a signal in the switching member, and the signal transmitter being acted upon with at least one test signal to monitor and check the operational reliability, **characterised in that**, to determine a switching threshold for a switching signal, the height of the test signal or the height of the test threshold after each applied and newly determined test signal is determined afresh and fixed in dependence on said signal.

2. Method according to claim 1, **characterised in that**, to monitor and check the operational reliability, a test signal is given to the signal transmitter, by means of which test signal a switching threshold for a switching signal is permanently determined based on the measurement of the operational pressure triggered by mechanical actuation.

3. Method according to claim 1 or 2, **characterised in that**, to monitor and check the operational reliability, a test signal is given to the signal transmitter, which test signal generates a signal in the pressure wave switch, if a test threshold is exceeded, and said signal is passed to the evaluation apparatus.

4. Method according to at least one of claims 1 to 3, **characterised in that** the test signal is applied to the signal transmitter at periodic and selectable time intervals.

5. Method according to at least one of claims 1 to 4, **characterised in that**, by using pressure sensors, the test signal introduced into the signal transmitter is measured according to the amount.

6. Method according to at least one of claims 1 to 5, **characterised in that** the test signal is applied to the signal transmitter as a pressure signal or as a reduced pressure signal to determine the switching threshold for the switching signal, the test signal being applied to the signal transmitter in a smaller amount than the switching signal.

7. Method according to at least one of claims 1 to 6, **characterised in that**, by measuring an operational pressure of the non-actuated signal transmitter by means of a pressure sensor, a zero point is fixed as the starting point or reference for the test signal or the test threshold.

8. Method according to claim 7, **characterised in that** the zero point is determined afresh prior to each test signal in the pressure sensor and is measured again as the starting point for determining a height of the test signal or of a test threshold.

9. Method according to at least one of claims 1 to 8, **characterised in that**, if a test threshold of the test signal applied to the signal transmitter is not reached, a conclusion about a defect, more especially a leakage, is made possible.

10. Apparatus for detecting signals, or pressure wave switches (1), which can be connected to at least one signal transmitter (9), which communicates with a pressure sensor (6), at least one pulse transmitter element (7) being associated with the pressure wave switch (1) to generate a test signal, **characterised in that** said apparatus is provided with means by means of which, to determine a switching threshold for a switching signal, the height of the test signal or the height of the test threshold after each applied and newly determined test signal is determined afresh and fixed in dependence on said test signal.

11. Apparatus according to claim 10, **characterised in that** the pulse transmitter element (7) of the pressure wave switch (1) is connected to the signal transmitter (9)

12. Apparatus according to claim 10 or 11, **characterised in that** pressure sensor (6) and pulse transmitter element (7) are connected to a control means (3), which delivers an active signal to an evaluation apparatus (4).

13. Apparatus according to at least one of claims 10 to 12, **characterised in that**, in the pulse transmitter element (7), at least one test signal (11) can be generated which can be introduced into the signal transmitter (9) via a supply line (8.2), the test signal (11) completely traversing the signal transmitter (9) with at least one chamber (10.1, 10.2) and being measurable in the subsequent pressure sensor (6).

14. Apparatus according to at least one of claims 10 to 13, **characterised in that** a selectable test signal (11 ), which emerges at time-selectable intervals, originates from the pulse transmitter element (7) and generates an appropriate signal, if a selectable test threshold (12) is exceeded, measured in the pressure sensor (6) in the control means (3).

15. Apparatus according to at least one of claims 10 to 14, **characterised in that** the pulse transmitter element (7) is connected to one end of a signal transmitter (9), and the pressure sensor (6) of the pressure wave switch (1) is connected to the other end of said transmitter.

## Revendications

1. Procédé pour actionner un capteur de signaux ainsi qu'un élément de commutation, ou un commutateur d'ondes de pression, pour la protection des zones de coincement, des réglettes de commutation ou des surfaces de commutation étant générée dans le capteur de signaux, par actionnement mécanique, une onde de pression qui génère un signal dans l'élément de commutation et qui, pour surveiller et contrôler la sécurité de fonctionnement du capteur de signaux, est soumise à l'admission d'un signal de test,
**caractérisé par le fait que**
pour déterminer un seuil de commutation pour un signal de commutation, la hauteur du signal de test ou la hauteur du seuil de test est à nouveau déterminée et fixée après chaque signal de test appliqué et à nouveau déterminé, en fonction de ce dernier.

2. Procédé selon la revendication 1, **caractérisé par le fait que**, pour surveiller et contrôler la sécurité de fonctionnement, il est donné un signal de test au capteur de signal par lequel est à nouveau déterminé en permanence un seuil de commutation pour un signal de commutation, sur base de la mesure de la pression de service déclenchée par actionnement mécanique.

3. Procédé selon la revendication 1 ou 2, **caractérisé par le fait que**, pour surveiller et contrôler la sécurité de fonctionnement, il est donné un signal de test au capteur de signal qui, en cas de dépassement d'un seuil de test, génère un signal dans le commutateur d'ondes de pression et qui est transmis au dispositif d'évaluation.

4. Procédé selon au moins l'une des revendications 1 à 3, **caractérisé par le fait que** le signal de test est appliqué au capteur de signaux à des intervalles de temps périodiques et pouvant être choisis.

5. Procédé selon au moins l'une des revendications 1 à 4, **caractérisé par le fait qu'**à l'aide de capteurs de pression est mesuré quant à sa grandeur le signal de test introduit dans le capteur de signaux.

6. Procédé selon au moins l'une des revendications 1 à 5, **caractérisé par le fait que** le signal de test est appliqué au capteur de signaux sous forme de signal de pression ou de dépression, pour déterminer le seuil de commutation pour le signal de commutation, le signal de test étant appliqué au capteur de signaux en une grandeur plus petite que le signal de commutation.

7. Procédé selon au moins l'une des revendications 1 à 6, **caractérisé par le fait que** par la mesure d'une pression de service du capteur de signaux non actionné à l'aide d'un capteur de pression est fixé un point zéro comme point de départ ou référence pour le signal de test ou le seuil de test.

8. Procédé selon la revendication 7, **caractérisé par le fait que** le point zéro est à nouveau déterminé dans le capteur de pression avant chaque signal de test et à nouveau mesuré comme point de départ pour la détermination d'une hauteur du signal de test ou d'un seuil de test.

9. Procédé selon au moins l'une des revendications 1 à 8, **caractérisé par le fait qu'**en cas de descente au-dessous d'un seuil de test du signal de test appliqué sur le capteur de signaux est rendue possible la conclusion d'un défaut, en particulier d'une fuite.

10. Dispositif pour reconnaître des signaux, ou commutateur d'ondes de pression (1), auquel peut être raccordé au moins un capteur de signaux (9) communiquant avec un capteur de pression (6), au commutateur d'ondes de pression (1) étant associé au moins un élément capteur d'impulsions (7) destiné à générer un signal de test, **caractérisé par le fait qu'**il est pourvu de moyens par lesquels est à nouveau déterminée et fixée, pour déterminer un seuil de commutation pour un signal de commutation, la hauteur du signal de test ou la hauteur du seuil de test après chaque signal de test appliqué et à nouveau déterminé, en fonction de ce dernier.

11. Dispositif selon la revendication 10, **caractérisé par le fait que** l'élément capteur d'impulsions (7) du commutateur d'ondes de pression (1) est relié au capteur de signaux (9).

12. Dispositif selon la revendication 10 ou 11, **caractérisé par le fait que** le capteur de pression (8) et l'élément capteur d'impulsions (7) sont reliés à une commande (3) qui fournit un signal actif à un dispositif d'évaluation (4).

13. Dispositif selon au moins l'une des revendications 10 à 12, **caractérisé par le fait que** dans l'élément capteur d'impulsions (7) peut être généré au moins un signal de test (11) pouvant être introduit, par une ligne d'alimentation (8.2), dans le capteur de signaux (9), le signal de test (11) traversant entièrement le capteur de signaux (9) avec au moins une chambre (10.1, 10.2) et pouvant être mesuré dans le capteur de pression (8) qui suit.

14. Dispositif selon au moins l'une des revendications 10 à 13, **caractérisé par le fait que** de l'élément capteur d'impulsions (7) part, à des intervalles pouvant être choisis dans le temps, un signal de test (11) sortant pouvant être choisi et qui, en cas de dépassement d'un seuil de test pouvant être choisi (12), mesuré dans le capteur de pression (6), génère un signal correspondant dans la commande (3).

15. Dispositif selon au moins l'une des revendications 10 à 14, **caractérisé par le fait qu'**à un capteur de signaux (9) est raccordé, à une extrémité, l'élément capteur d'impulsions (7) et, à l'autre extrémité, le capteur de pression (6) du commutateur d'ondes de pression.
